# EUROPÄISCHE PATENTSCHRIFT

(11) **EP 0 856 225 B1**
(45) Veröffentlichungstag und Bekanntmachung des Hinweises auf die Patenterteilung: **22.09.1999**
(21) Anmeldenummer: 97920669.5
(22) Anmeldetag: 14.04.1997
(51) Int. Cl.: H04N 7/14, H04N 7/167

(54) **VERSCHLÜSSELUNG UND ENTSCHLÜSSELUNG VON MULTIMEDIADATEN**
ENCRYPTION AND DECRYPTION OF MULTI-MEDIA DATA
CRYPTAGE ET DECRYPTAGE DE DONNEES MULTIMEDIAS

(30) Priorität: 26.06.1996 DE 19625635
(43) Veröffentlichungstag der Anmeldung: 05.08.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: RUMP, Niels, D-91054 Erlangen (DE); ZELLER, Jürgen, D-85737 Ismaning (DE); POPP, Harald, D-90587 Tuchenbach (DE)
(74) Vertreter: Schoppe, Fritz, Dipl.-Ing.
(86) Internationale Anmeldenummer: EP9701846
(87) Internationale Veröffentlichungsnummer: WO9750248

(56) Entgegenhaltungen:
- EP-A- 0 714 207
- WO-A-94/10802
- WO-A-96/11549
- FUNKSCHAU, Bd. 68, Nr. 7, 15.März 1996, Seiten 75-77, XP000581075 HOFMEIR S: "MULTIMEDIA FUER UNTERWEGS"

## Beschreibung

Die vorliegende Erfindung bezieht sich auf die Verschlüsselung und Entschlüsselung von Multimediadaten und insbesondere auf Verschlüsselungs- und Entschlüsselungsformate, die beispielsweise beim kommerziellen Vertreiben von Multimediadaten eingesetzt werden können.

Mit dem Auftreten von Telekommunikationsnetzen und insbesondere aufgrund der großen Verbreitung von Multimediadaten-fähigen Personalcomputern entstand ein Bedarf, digitale Multimediadaten, wie z.B. digitale Audiodaten oder digitale Videodaten, kommerziell zu vertreiben. Die Telekommunikationsnetze können beispielsweise analoge Telefonleitungen, digitale Telefonleitungen, wie z.B. ISDN, oder auch das Internet sein. Unter kommerziellen Anbietern von Multimediaprodukten besteht der Bedarf, Multimediadaten zu verkaufen oder auszuleihen, wobei es einem Kunden möglich seien sollte, aus einem bestimmten Katalog zu jeder Zeit individuell ein bestimmtes Produkt auswählen zu können, das dann selbstverständlich nur von dem Kunden, der dafür bezahlt, benutzt werden kann.

Im Gegensatz zu bekannten verschlüsselten Fernsehprogrammen, wie z.B. den Fernsehkanälen Premiere oder MTV, bei denen die ausgesendeten Daten für alle Benutzer, die gegen eine bestimmte Gebühr eine geeignete Entschlüsselungsvorrichtung erworben haben, gleich verschlüsselt ist, schafft die vorliegende Erfindung Verfahren und Vorrichtungen, die eine individuelle, kundenselektive Verschlüsselung und Entschlüsselung von Multimediadaten ermöglichen. Im Gegensatz zu den genannten Fernsehkanälen, die ein festes Programm vorgeben, für das sich der Benutzer komplett entscheiden muß, ermöglichen die Verfahren und Vorrichtungen der vorliegenden Erfindung eine maximale Wahlfreiheit des Kunden, d.h. derselbe muß nur für die Produkte bezahlen, die er tatsächlich auch benutzt hat.

Das U. S. Patent Nr. 5,369,702 offenbart ein System zum Erhöhen der Sicherheit eines Computersystems, wobei einzelne Benutzer dasselbe flexibel und effizient nützen können. Das in dieser Schrift offenbarte Verfahren umfaßt die Schritte des Zugreifens auf einen objektorientierten Schlüsselverwalter, des Auswählens eines zu verschlüsselnden Objekts, des Auswählens einer Etikette für das Objekt, des Auswählens eines Verschlüsselungsalgorithmus, des Verschlüsselns des Objekts gemäß dem Verschlüsselungsalgorithmus, des Etikettierens des verschlüsselten Objekts, des Lesens des Objektetiketts, des Bestimmens einer Zugriffsermächtigung basierend auf dem Objektetikett und des Entschlüsselns des Objekts, wenn die Zugriffsermächtigung erteilt ist. Eine Datei-"Etikette" besteht aus einer Serie von Buchstaben oder Zahlen, welche verschlüsselt oder nicht verschlüsselt sein können. Diese Datei-Etikette ist von einer Nachricht getrennt, jedoch dem Übertragen der Nachricht zugeordnet, wobei die Etikette ferner die Person, Position, Ausrüstung und/oder Organisation identifiziert, welche die zugeordnete Nachricht, d. h. die Multimediadaten, empfangen darf.

Das U. S. Patent Nr. 5,319,705 betrifft ein Verfahren und ein System zum sicheren Verteilen einer Mehrzahl von Softwaredateien von einem Softwareverteilsprozessor zu einem Benutzerprozessor, während der Benutzerprozessor selektiv in die Lage versetzt wird, nur eine Teilmenge einer kleineren Mehrzahl von Softwaredateien zu verwenden. Dies wird durch Verwenden eines Kundenschlüssels erreicht, welcher einen unverschlüsselten Kundenschlüssel und einen abgeleiteten Abschnitt aufweist, der aus der Kundennummer abgeleitet ist.

Die Aufgabe der vorliegenden Erfindung besteht darin, Verfahren und Vorrichtungen zum Verschlüsseln und Entschlüsseln von Multimediadaten zu schaffen, welche zum einen einen wirksamen Urheberrechtsschutz garantieren, und welche zum anderen in der Lage sind, individuell angeforderte Daten flexibel zu ver- bzw. entschlüsseln.

Diese Aufgabe wird durch ein Verfahren zum Verschlüsseln von Multimediadaten gemäß Anspruch 1, durch ein Verfahren zum Entschlüsseln von verschlüsselten Multimediadaten gemäß Anspruch 19, durch eine Vorrichtung zum Verschlüsseln von Multimediadaten gemäß Anspruch 25 und durch eine Vorrichtung zum Entschlüsseln von verschlüsselten Multimediadaten gemäß Anspruch 27 gelöst.

Der Erfindung liegt die Erkenntnis zugrunde, daß ein ausreichender Urheberrechtsschutz für Audio- und Videoprodukte, welche in Form von digitalen Multimediadaten vorliegen, nur dann gewährleistet werden kann, wenn möglichst unmittelbar nach der Produktion der digitalen Multimediadaten, die beispielsweise gemäß dem bekannten Standard MPEG Audio Layer 3 codiert bzw. komprimiert sind, eine sichere Verschlüsselung durchgeführt wird. Für Fachleute ist es offensichtlich, daß die vorliegende Erfindung nicht auf die Verwendung von Daten in dem Format MPEG Layer 3 begrenzt ist, sondern daß auch unkomprimierte Multimediadaten oder nach irgendeinem anderen Verfahren komprimierte Multimediadaten ebenfalls verwendet werden können.

Nachdem die Multimediadaten vor ihrer Speicherung/Lagerung von einer Verschlüsselungsvorrichtung verschlüsselt worden sind, können sie individuell von einem Benutzer angefordert werden, der sich im Besitz einer geeigneten Entschlüsselungsvorrichtung befindet. Diese Entschlüsselungsvorrichtung darf jedoch nur zur Durchführung ihrer Aufgaben den Verschlüsselungsschutz um die Daten herum lösen, wobei ebenfalls von großer Bedeutung ist, daß nicht jede Entschlüsselungsvorrichtung in der Lage ist, die Multimediadaten zu lesen, sondern nur die Entschlüsselungsvorrichtung, die sich bei dem Kunden befindet, der für die Multimediadaten bezahlt hat. Ferner ist es wichtig, daß es dem Benutzer möglichst schwer wenn nicht unmöglich gemacht wird, die Multimediadaten selbst sowie die Verschlüsselung unerlaubt zu verändern.

Sollte ein Benutzer versuchen, die Multimediadaten zu verändern, dann ist es wünschenswert, daß die Daten vollständig unlesbar sind. Die Tatsache, daß die Verschlüsselungsvorrichtung bereits an ihrem Ausgang verschlüsselte Dateien erzeugt, den Schutz gewissermaßen sofort über die Multimediadaten legt, gewährleistet also, daß keine ungeschützten Daten am Beginn einer Übertragungs/Speicherungs-Kette auftreten.

Die Entschlüsselungsvorrichtung ist in der Lage, die speziell verschlüsselten Daten zu lesen. Das Verfahren zum Verschlüsseln von Multimediadaten gemäß der vorliegenden Erfindung erzeugt zusätzlich zu vorliegenden unverschlüsselten Multimediadaten einen Bestimmungsdatenblock, in dem sich verschiedene Informationen bezüglich der Verschlüsselung der unverschlüsselten Multimediadaten sowie bezüglich allgemeiner und spezieller Funktionen, die von der vorliegenden Erfindung ausgeführt werden können, befinden.

Einige der Funktionalitäten, die von einer Entschlüsselungsvorrichtung gemäß der vorliegenden Erfindung gefordert werden, werden nachfolgend beschrieben:

Eine Entschlüsselungsvorrichtung der vorliegenden Erfindung soll in der Lage sein, einen Demoabspieler für Audiodaten, die z. B. in dem Format ISO/MPEG Layer 3 sein können, zu implementieren, welcher es nur zuläßt, daß etwa die ersten 20 Sekunden einer Audioaufzeichnung abgespielt werden. Unter bestimmten Umständen soll es nun möglich sein, daß der Demoabspieler bei einem bestimmten Kunden bestimmte Musikstücke länger als 20 Sekunden abspielt. Dies wird durch eine sogenannte Freischaltung des Bitstroms erreicht, welche durch bestimmte in dem Bestimmungsdatenblock vorhandene Einträge bewirkt wird.

Weiterhin soll die vorliegende Erfindung in der Lage sein, eine Entschlüsselungsvorrichtung, d.h. einen Abspieler, für Audiodaten im Format MPEG Layer 3 zu implementieren, der es nur bestimmten Kunden erlaubt, eine bestimmte Audiodatei abzuspielen. Dies dient zum Urheberrechtsschutz für Audio- bzw. Videowerke, wobei ein Abspielen lediglich nach Bezahlung einer Gebühr möglich sein soll.

Zusätzlich soll die vorliegende Erfindung einen Spieler implementieren, der nicht nur den Inhalt einer Audiodatendatei abspielen kann, sondern der auch bestimmte Zusatzinformationen anzeigen kann. Diese Zusatzinformationen (d.h. Metadaten) können Informationen über den Künstler, die Abspielzeit, und weitere Informationen über die Audioaufzeichnung oder beispielsweise auch ein Bild der Schallplatten- oder der CD-Hülle sein.

Eine Verschlüsselungsvorrichtung gemäß der vorliegenden Erfindung ist in der Lage, Multimediadaten effizient und sicher zu verschlüsseln. Ferner implementiert die vorliegende Erfindung eine spezielle Funktionalität, welche Herausforderungs-Antwort-Verfahren genannt wird und später detailliert beschrieben ist.

Dieses Verfahren erlaubt das Erzeugen von vorverschlüsselten Audiodaten, die in einer Datenbank gespeichert sind, auf die ein Kunde sehr schnell zugreifen kann, welcher einen privaten Schlüssel verwendet, der von dem tatsächlich verwendeten Schlüssel zur Verschlüsselung der Daten abgeleitet ist, wobei sich der Kunde unter Verwendung seines privaten Schlüssels und seines Benutzerindexes den tatsächlich verwendeten Schlüssel zur Verschlüsselung selbst berechnen kann, wonach die abgerufenen Multimediadaten entschlüsselt werden können, um sie beispielsweise abzuspielen.

Damit ist es möglich, daß für viele Kunden, die das gleiche Stück abrufen, das Stück nicht jedesmal vollständig für jeden einzelnen Kunden verschlüsselt werden muß, sondern daß die Daten für alle Kunden gleich verschlüsselt werden können, wobei jedoch jeder Kunde den tatsächlich verwendeten Schlüssel unter Verwendung seines Privatschlüssels und eines von der Verschlüsselungsvorrichtung mitgeteilten Antwortschlüssels selbst berechnen kann.

Bei dem Herausforderungs-Antwort-Verfahren wird die individuelle Verschlüsselung für jeden einzelnen Benutzer also nicht durch eine vollständige Neuverschlüsselung der Multimediadaten erreicht, sondern nur durch eine vergleichsweise geringe Änderung in dem Bestimmungsdatenblock, der gemäß der vorliegenden Erfindung zu den Multimediadaten hinzugefügt wird.

Die Verschlüsselung gemäß der vorliegenden Erfindung erzeugt also ein Dateiformat zum Schutz von Multimediadaten, welches bei der Entschlüsselung gemäß der vorliegenden Erfindung verwendet wird, um beispielsweise die oben beschriebenen Funktionalitäten zu implementieren.

Ein bevorzugtes Ausführungsbeispiel der vorliegenden Erfindung wird nachfolgend bezugnehmend auf die beiliegenden Zeichnungen detaillierter erläutert. Es zeigen:
- Fig. 1: einen festen Teil eines Bestimmungsdatenblocks;
- Fig. 2: einen variablen Teil eines Bestimmungsdatenblocks;
- Fig. 3: eine Aufteilung von Multimediadaten in verschlüsselte Daten und unverschlüsselte Daten;
- Fig. 4: einen Hüllenblock für die verschiedenen Einträge im variablen Teil des Bestimmungsdatenblocks; und
- Fig. 5: eine Übersicht von für einzelne Funktionalitäten benötigten Einträgen in den Bestimmungsdatenblock.

Jede Multimediaschutz-Datei (MMP-Datei; MMP = Multi Media Protection), welche im wesentlichen ein Datenstrom sein kann, der einen Anfang und ein Ende aufweist, wird von einem speziellen MMP-Bestimmungsdatenblock begleitet. Dieser Bestimmungsdatenblock kann am Anfang einer Multimediadatei oder auch in der Mitte der Datei auftreten. Bei einem bevorzugten Ausführungsbeispiel der vorliegenden Erfindung sollte jedoch am Beginn einer Multimediadatei ein Bestimmungsdatenblock vorhanden sein. Nachfolgend wird das Format dieses Bestimmungsdatenblockes erörtert.

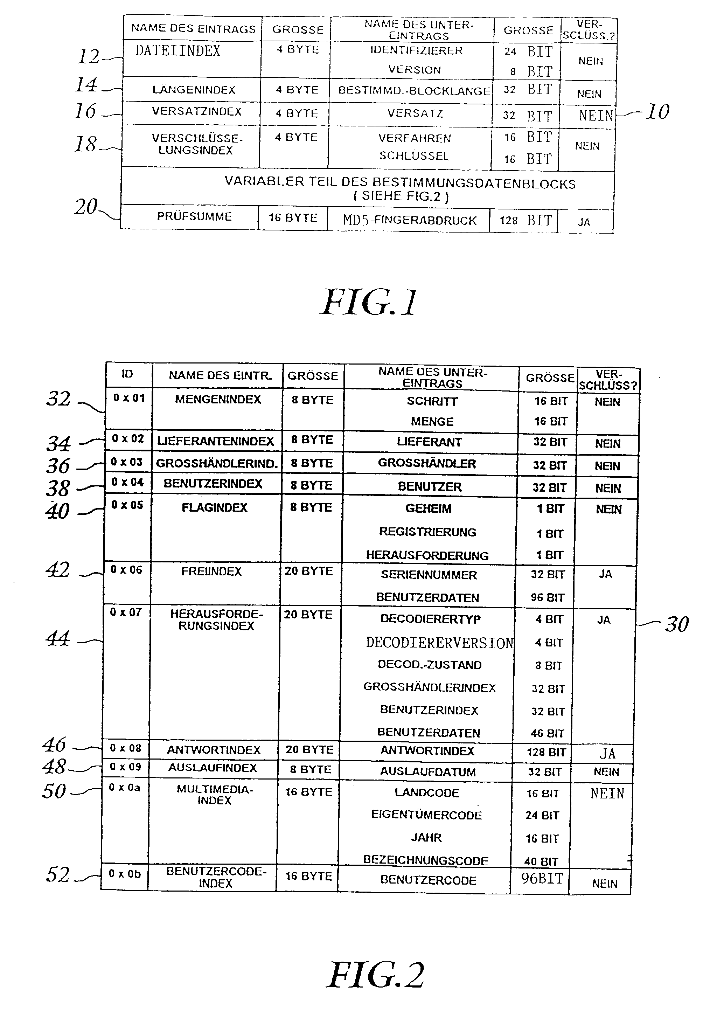

Der Bestimmungsdatenblock besteht aus zwei Teilen und zwar aus einem festen Teil 10, welcher in Fig. 1 gezeigt ist, und aus einem variablen Teil 30, der in Fig. 2 gezeigt ist. Der feste Teil 10 des Bestimmungsdatenblocks, der aus 10 und 30 besteht, enthält allgemein gesagt Minimalinformationen, wie z.B. Informationen, wie der Bestimmungsdatenblock verschlüsselt ist, wie lange derselbe ist und wo ein potentiell vorhandener nächster Bestimmungsdatenblock zu finden ist. Die Einträge in den festen Teil des Bestimmungsdatenblocks (10, 30) werden nachfolgend einzeln beschrieben.

In der in Fig. 1 gezeigten Tabelle bezeichnet die erste Spalte den Namen des jeweiligen Eintrags, die zweite Spalte die Größe desselben, die dritte Spalte den(die) Name(n) von möglichen Untereinträgen, die vierte Spalte die jeweilige Größe des einzelnen Untereintrags, während die letzte Spalte der Tabelle in Fig. 1 anzeigt, ob der Eintrag, d.h. die demselben zugeordneten Untereinträge, verschlüsselt sind oder nicht.

Die erste Zeile 12 enthält einen Dateiindex, der als Untereintrag einen Identifizierer bezüglich einer speziellen MMP-Datei sowie eine Versionsnummer derselben aufweist. In Zeile 14 befindet sich ein Längenindex, welcher die Länge des Bestimmungsdatenblocks anzeigt. Dieser Eintrag dient beispielsweise zum Überspringen des Bestimmungsdatenblocks oder auch zum einfacheren parsen. In Zeile 16 bezeichnet ein Versatz index den Versatz von einem Bestimmungsdatenblock zu einem nächsten Bestimmungsdatenblock, wobei derselbe nützlich ist, um z.B. im Falle von mehreren Bestimmungsdatenblöcken in einer einzigen MMP-Datei von einem Bestimmungsdatenblock zum nächsten Bestimmungsdatenblock springen zu können, ohne immer den Dateiindex auf Übereinstimmung prüfen zu müssen.

Eine Zeile 18 der Tabelle in Fig. 1 enthält einen Verschlüsselungsindex, welcher ein Index für eine Tabelle von Verschlüsselungs- und Entschlüsselungsalgorithmen ist, welche verwendet werden, um entscheidende Teile des Bestimmungsdatenblocks für nicht autorisierte Benutzer oder Programme unlesbar zu machen. Bei einer Implementierung der vorliegenden Erfindung können 65.535 verschiedene Verschlüsselungsalgorithmen verwendet werden, welche in einer Urheberrechtsschutzbibliothek abgelegt sind, die sowohl in der Verschlüsselungsvorrichtung als auch in der Entschlüsselungsvorrichtung gemäß der vorliegenden Erfindung vorhanden sein muß. Auf einen dieser 65.535 verschiedenen Verschlüsselungsalgorithmen wird über die ersten zwei Byte (d.h. den ersten Untereintrag Verfahren) zugegriffen. Der zweite Untereintrag Schlüssel liefert einen Index für eine Tabelle, in der ein Satz von Verschlüsselungsschlüsseln oder Schlüsseln für jeden Verschlüsselungsalgorithmus gespeichert sein kann. Diese Tabelle von Schlüsseln für jeden einzelnen Verschlüsselungsalgorithmus muß ebenfalls sowohl in der Verschlüsselungsvorrichtung als auch in der Entschlüsselungsvorrichtung der vorliegenden Erfindung vorhanden sein.

Bei der vorliegenden Erfindung wird also zum Ver- bzw. Entschlüsseln ein sogenanntes symmetrisches Verschlüsselungsverfahren verwendet, was bedeutet, daß sowohl die Verschlüsselungsvorrichtung als auch die Entschlüsselungsvorrichtung im Besitz sowohl der Verschlüsselungsverfahren als auch besonders der Schlüssel selbst sein müssen. Zur Ausführung der Erfindung würde es jedoch auch genügen, lediglich den Verschlüsselungsalgorithmus in dem Verschlüsselungsindex 18 zu bestimmen. In diesem Fall könnte der Schlüssel selbst beispielsweise vorgegeben sein. Dieses Ausführungsbeispiel würde jedoch einen geringeren Schutz als das vorher beschriebene Ausführungsbeispiel mit Algorithmus und Schlüssel liefern.

In dieser Beschreibung wird der Ausdruck "Verschlüsselungsalgorithmus" demnach derart verwendet, daß derselbe sowohl einen Verschlüsselungsalgorithmus, der keinen Schlüssel oder einen fest vorgegebenen bekannten Schlüssel verwendet, als auch einen Verschlüsselungsalgorithmus bezeichnet, der einen Schlüssel benötigt, um einen Ver- bzw. Entschlüsselung durchführen zu können. Ein Verschlüsselungsalgorithmus mit einem Schlüssel A kann somit ein erster Verschlüsselungsalgorithmus im Sinne dieser Beschreibung sein, während der gleiche Verschlüsselungsalgorithmus mit einem Schlüssel B ein zweiter Verschlüsselungsalgorithmus im Sinne dieser Beschreibung ist, der sich von dem ersten Verschlüsselungsalgorithmus unterscheidet.

Bei einem bevorzugten Ausführungsbeispiel der vorliegenden Erfindung wird ein bestimmter Teil des Bestimmungsdatenblocks, wie es später dargelegt ist, mit dem in dem Eintrag Verschlüsselungsindex 18 bezeichneten Algorithmus und Schlüssel verschlüsselt. Der Eintrag Verschlüsselungsindex 18 liefert somit den Bestimmungsdaten-Verschlüsselungsalgorithmus.

Der im Untereintrag Schlüssel ausgewählte Schlüssel wird ferner (bis zum nächsten Bestimmungsdatenblock im Datenstrom) als Basis zur Verschlüsselung von Multimediadaten verwendet, um einen dem Bestimmungsdatenblock zugeordneten Multimediadatenblock zu erhalten.

Dieser Basisschlüssel wird bei einem bevorzugten Ausführungsbeispiel der vorliegenden Erfindung mit einem Lieferantenindex 34, mit einem Großhändlerindex 36 oder mit einem Benutzer index 38 mittels einer EXKLUSIV-ODER-Verknüpfung verknüpft, um den Schlüssel für die Verschlüsselung der Multimediadaten, d.h. im Sinne dieser Beschreibung den Multimediadaten-Verschlüsselungsalgorithmus, zu erhalten. Ist keiner der Einträge 34 bis 38 vorhanden, so werden die Multimediadaten direkt mit dem "Basisschlüssel" aus dem Eintrag Verschlüsselungsindex 18 verschlüsselt. Sind weniger der Einträge 34 - 38 als möglich vorhanden, so werden die vorhandenen für die EXKLUSIV-ODER-Verknüpfung mit dem "Basisschlüssel" herangezogen, um den Multimediadaten-Verschlüsselungsalgorithmus zu erhalten.

Hinter dem Eintrag 18 in dem Bestimmungsdatenblock befindet sich der variable Teil 30 des Bestimmungsdatenblocks, der in Fig. 2 gezeigt ist und später beschrieben wird. Hinter dem variablen Teil des Bestimmungsdatenblocks befindet sich noch ein letzter Eintrag 20, der Prüfsumme genannt wird. Diese Prüfsumme besteht aus einem sogenannten MD5-Fingerabdruck, der detaillierter in der RFC1321 beschrieben ist. Zum Verständnis der vorliegenden Erfindung soll er jedoch kurz ausgeführt werden. MD5 ist ein Algorithmus, der eine beliebige Anzahl von Datenbyte in eine Zahl mit einer Länge von 128 Bit (=16 Byte) abbildet. Die MD5-Abbildung (MD5 = Message Digest 5) hat die Eigenschaft, daß auch die geringste Änderung in den Eingangsdaten eine völlig andere MD5-Zahl erzeugt. Daher wird MD5 benutzt, um aus Daten beliebiger Länge einen Fingerabdruck fester Größe zu erzeugen. In dem Eintrag 20 Prüfsumme befindet sich bei einem Ausführungsbeispiel der vorliegenden Erfindung beispielsweise ein MD5-Fingerabdruck des Bestimmungsdatenblocks (10, 30). Ein anderes Ausführungsbeispiels könnte im Eintrag Prüfsumme 20 beispielsweise sowohl den Bestimmungsdatenblock als auch eine vorbestimmte Anzahl von zu verschlüsselnden Multimediadaten aufweisen, denen der beschriebene Bestimmungsdatenblock zugeordnet ist. Dadurch definiert der Eintrag 20 eindeutig und manipuliersicher (der Eintrag 20 ist zusätzlich noch verschlüsselt) die Zuordnung eines Bestimmungsdatenblocks zu den Multimediadaten.

Alle Einträge in den Bestimmungsdatenblock, d.h. auch die Einträge des nachfolgend beschriebenen variablen Teils des Bestimmungsdatenblocks, sind in der sogenannten "Big Endian"-Bytereihenfolge. Als "Big Endian" wird eine Übertragung/Speicherung bezeichnet, bei der das höchstwertige Byte als erstes übertragen/gespeichert wird. Ein Beispiel soll dies veranschaulichen. Ein Datum ist beispielsweise vier Byte groß, d.h. sein Wert lautet 0x56fe4321. Nach der "Big Endian"-Bytereihenfolge wird 0x56 zuerst übertragen/gespeichert, woraufhin 0xfe, 0x43 und 0x21 folgen.

Wie bereits angemerkt wurde, ist in Fig. 2 eine tabellarische Darstellung des variablen Teils 30 des Bestimmungsdatenblocks gezeigt. Die erste Spalte der Tabelle in Fig. 2 bezeichnet eine Identifikationsnummer (ID) der einzelnen Einträge. Die zweite Spalte enthält den Namen des Eintrags, dessen Größe in der dritten Spalte angegeben ist. Die vierte Spalte zeigt wiederum analog zu der Tabelle in Fig. 1 den Namen des einzelnen Untereintrags oder potentiell mehrerer Untereinträge, deren Größe wiederum in der vorletzten Spalte angegeben ist. Die letzte Spalte zeigt genauso wie in Fig. 1 an, ob der einzelne Eintrag verschlüsselt ist oder nicht.

Der variable Teil 30 des Bestimmungsdatenblocks enthält unter anderem Informationen bezüglich der urheberrechtlichen Verschlüsselung des Audiobitstroms, d.h. der Multimediadaten. Nachfolgend werden die Einträge in den variablen Teil des Bestimmungsdatenblocks und ihre Funktionen bzw. Aufgaben im einzelnen beschrieben.

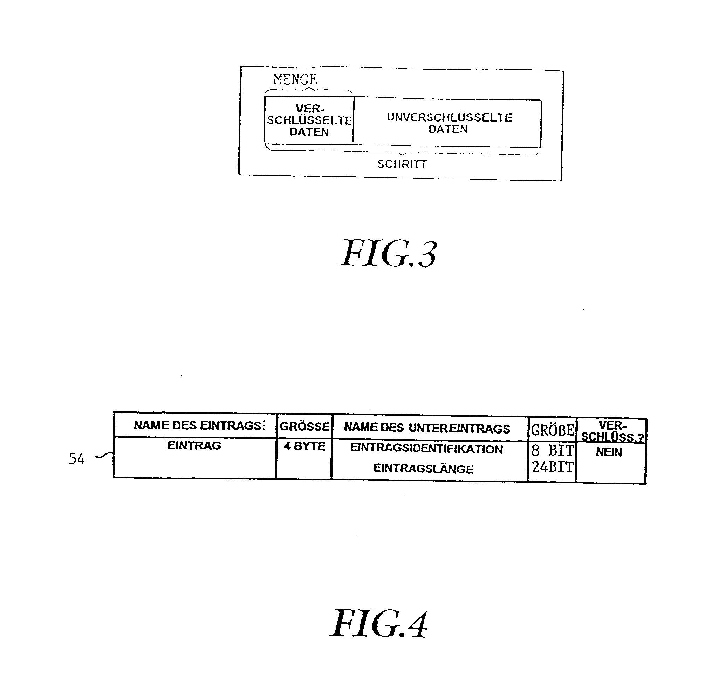

In Zeile 32 befindet sich ein Mengenindex, welcher aus zwei Untereinträgen, d.h. Schritt und Menge, besteht. Der erste Untereintrag Schritt gibt, wie es in Fig. 3 detaillierter dargestellt ist, die Gesamtmenge von Multimediadaten an, die dem speziellen Bestimmungsdatenblock zugeordnet sind, falls die Multimediadatendatei lediglich einen Bestimmungsdatenblock aufweist. Falls einem Bestimmungsdatenblock mehrere Multimediadatenblöcke folgen, so weist der Bestimmungsdatenblock mehrere Mengenindizes auf, die sich auf je einen Multimediadatenblock beziehen. Um Multimediadaten auf einfache Weise speichern oder übertragen zu können, empfiehlt es sich, die Multimediadaten, d.h. den Bitstrom, in einzelne Datenblöcke oder Multimediadateien mit überschaubarer Länge zu unterteilen, denen dann ein Bestimmungsdatenblock zugeordnet wird. Dies bedeutet, daß z.B. ein Musikstück mehrere Bestimmungsdatenblöcke aufweist, welche möglicherweise für ein einzelnes Musikstück mehrere verwendete Verschlüsselungsalgorithmen bezeichnen können. Daneben können auch einem Bestimmungsdatenblock in einer Multimediadatei mehrere Multimediadatenblöcke folgen, wie es oben erklärt wurde.

Aufgrund der Tatsache, daß bei einem Ausführungsbeispiel der vorliegenden Erfindung die Audiodaten im MPEG Layer 3 Format vorliegen, welches bereits eine hohe Kompression der Audiodaten bewirkt, ist es im Sinne einer effizienten, zeitsparenden Ausführung der vorliegenden Erfindung ausreichend, lediglich einen bestimmten Teil eines einem Bestimmungsdatenblock zugewiesenen Datenblocks zu verschlüsseln und nicht den gesamten Datenblock zu verschlüsseln. Dies kann gemacht werden, da bei der Verwendung von hochkomprimierten Multimediaformaten schon ein sehr kleiner Teil von Störungen, d.h. Verschlüsselungen, gravierende Auswirkungen hat, da die hochkomprimierten Daten bereits eine minimale Informationsredundanz besitzen. Dieser Anteil der verschlüsselten Daten ist durch den Untereintrag Menge in dem Mengenindex 32 bezeichnet. Fig. 3 stellt also die Aufteilung eines Datenblocks in die verschlüsselten Daten und in die aus Wirtschaftlichkeitsgründen unverschlüsselt gelassenen Daten dar. An dieser Stelle sei darauf hingewiesen, daß die kleinste Menge von Daten, die von einem Verschlüsselungs- bzw. Entschlüsselungsalgorithmus ver- bzw. entschlüsselt werden kann, ganzzahlig durch den Untereintrag Schritt teilbar sein muß, um ein korrektes Ver- bzw. Entschlüsseln sicherzustellen. Für Fachleute ist es jedoch offensichtlich, daß die vorliegende Erfindung ebenso auch eine Vollverschlüsselung vornehmen kann, bei der Schritt gleich Menge ist, während bei einer Teilverschlüsselung Schritt größer als Menge ist.

Eine Zeile 34 in der Tabelle von Fig. 2 bezeichnet einen Lieferantenindex, wobei der Lieferantenindex einen numerischen Wert aufweist, der auf den Inhaber der Urheberrechte der in dem Datenblock verschlüsselten Multimediadaten hinweist, der für eine Verwendung der Multimediadaten in dem Datenblock bezahlt werden muß.

In einem Eintrag 36 mit der Bezeichnung Großhändlerindex befindet sich ein numerischer Wert, der den Großhändler der in dem Datenblock vorhandenen Multimediadaten bezeichnet.

In Zeile 38 der Tabelle in Fig. 2 befindet sich ein Benutzerindex, welcher auf den Kunden/Benutzer hinweist, an den die in dem Datenblock vorhandenen Multimediadaten übermittelt, z.B. verkauft oder ausgeliehen, wurden.

Ein Flagindex 40 enthält eine beliebige Anzahl von Flags, von denen bei einem bevorzugten Ausführungsbeispiel der vorliegenden Erfindung drei verschiedene Flags verwendet werden, die als Geheim, als Registrierung und als Herausforderung bezeichnet sind. Die Flag Geheim zeigt an, daß bei der Verschlüsselung der Großhändlerindex verwendet werden soll. Wenn diese Flag gesetzt ist, wird das Verschlüsselungs/Entschlüsselungs-Verfahren den Großhändlerindex als einen Eintrag in eine Direktzugriffstabelle benützen, um den für einen bestimmten Verschlüsselungs/Entschlüsselungs-Algorithmus erforderlichen Schlüssel zu erhalten. Dieser Eintrag ermöglicht eine Großhändler-spezifische Identifizierung von Multimediadaten, d.h. ein Benutzer/Kunde wird z.B. in der Lage sein, alle Produkte von einem spezifischen Großhändler zu beziehen.

Die Flag Registrierung zeigt an, daß sowohl der Großhändlerindex als auch der Benutzerindex bei der Verschlüsselung verwendet werden sollen. Das Verschlüsselungs/Entschlüsselungs-Verfahren wird dieses Paar (Großhändlerindex, Benutzerindex) beim Adressieren einer Direktzugriffstabelle verwenden, wodurch der Schlüssel für einen speziellen Verschlüsselungsalgorithmus erhalten werden kann. Diese Flag ermöglicht zusammen mit den jeweiligen Einträgen, daß ein Großhändler einzelne Benutzer spezifisch bedienen kann.

Die Herausforderungsflag zeigt an, daß der Kunde einen Herausforderungsindex 44 und seinen Benutzerindex verwendet hat, um eine MMP-Datei zu erhalten, wobei der Herausforderungsindex 44 und ein Antwortindexeintrag 46 in dem variablen Teil des Bestimmungsdatenblocks verschlüsselt sind. Eine detailliertere Beschreibung des Herausforderungs-Antwort-Verfahrens gemäß der vorliegenden Erfindung wird später durchgeführt. Selbst wenn nicht alle 32 möglichen Flags verwendet werden, muß bei einem Ausführungsbeispiel der vorliegenden Erfindung die Gesamtlänge von 4 Byte geschrieben, gesendet und gelesen werden. Alle unbenutzten Bits werden ignoriert, dieselben müssen jedoch auf Null gesetzt sein. Es ist ebenfalls möglich, alle drei Flags zu senden. In diesem Fall werden alle 3 Schlüssel verwendet, und zwar einer nach dem anderen im Sinne einer Bool'schen EXKLUSIV-ODER-Verknüpfung der drei Schlüssel.

Eine Zeile 42 der Tabelle von Fig. 2 enthält einen Freiindex. Dieser Freiindex 42 enthält zwei Untereinträge, d.h. Seriennummer und Benutzerdaten. Der Untereintrag Seriennummer enthält eine 32-Bit-lange Seriennummer, die die Multimediadaten identifiziert. Der Untereintrag Benutzerdaten, d.h. die nächsten 96 Bits des Eintrags Freiindex 42, ist mit den ersten 12 Byte des MD5-Fingerabdrucks der ersten Daten des Multimediadatenblocks von Menge bis Schritt minus Menge gefüllt.

Der gesamte Eintrag Freiindex 42 im variablen Teil des MMP-Bestimmungsdatenblocks ist verschlüsselt, wie es in der letzten Spalte in Fig. 2 gezeigt ist. Ferner ist die Prüfsumme 20 des Bestimmungsdatenblocks selbst verschlüsselt, d.h. kein Unberechtigter wird in der Lage sein, eine MMP-Bestimmungsdatenblock mit einem bestimmten MD5-Fingerabdruck zu erzeugen. Der Freiindex 42 liefert damit eine eindeutige Zuordnung des Bestimmungsdatenblocks (10, 30) zu den verschlüsselten oder auch unverschlüsselten Multimediadaten. Bei einer Wiedergabe d.h. einer Entschlüsselung wird nun überprüft, ob die aus den Multimediadaten errechnete MD5-Zahl mit der MD5-Zahl, die im Untereintrag Benutzerdaten vorhanden ist, übereinstimmt. Da bei jeder Änderung der Multimediadaten mit sehr hoher Wahrscheinlichkeit die MD5-Zahl derselben verschieden sein wird, ist anzunehmen, daß die zu schützenden Daten nicht verändert wurden, wenn die beiden MD5-Zahlen übereinstimmen.

Der Freiindex 42 wird für das bereits anfangs erwähnte Freischaltungsverfahren verwendet, welches ein Demospieler (eine Demoentschlüsselungsvorrichtung) implementieren kann. Die Untereinträge Seriennummer und Benutzerdaten in dem Freiindex 42 werden unter Verwendung der Bool'schen-Verknüpfung XOR kombiniert und mit einem Wert verglichen, der von dem Demospieler verwendet wird, d.h. auf den der Demospieler eingestellt bzw. eingerichtet ist. Wenn dieser Wert mit der Kombination von Seriennummer und Benutzerdaten übereinstimmt, wird die MMP-Datei freigeschaltet und kann länger als etwa 20 Sekunden gespielt werden. Falls diese Übereinstimmung nicht vorhanden ist, wird der Demospieler nicht freigeschaltet, weshalb derselbe das Abspielen, d.h. das Entschlüsseln, der Multimediadaten in der MMP-Datei abbricht. Die Freischaltung selbst dient also dazu, ein zur Wiedergabe benutztes Produkt, d.h. die Entschlüsselungsvorrichtung, zu modifizieren. Eine Entschlüsselungsvorrichtung, welche die vorliegende Erfindung ausführen kann, kann beispielsweise "WinPlay3" sein. Die Entschlüsselungsvorrichtung kann beispielsweise kostenlos als eine Demoversion bei allen Benutzern erhältlich sein. Sie wird jedoch auf eine Weitergabe von Multimediadaten mit einer Länge von beispielsweise 20 Sekunden beschränkt sein. Sobald allerdings ein MMP-Bit-strom mit gültigem Freiindex 42 erkannt wird, wird die Entschlüsselungsvorrichtung freigeschaltet. Dieselbe stellt also für die Wiedergabe einer MMP-Datei mit gültigem Freiindex 42 eine Vollversion ohne Begrenzung dar. Die Freischaltung mittels des Freiindex 42 hat also nichts mit der Bezahlung der geschützten Multimediadaten zu tun, sondern lediglich mit der Nutzung einer Demoversion der Entschlüsselungsvorrichtung. Aus technischen und politischen Gründen ist es nämlich oft einfacher, daß nicht die Entschlüsselungsvorrichtung selbst insgesamt bezahlt wird, sondern daß pro Multimediadatei eine kleine Summe für die Nutzung der Entschlüsselungsvorrichtung vom Großhändler oder Lieferanten, der den Freiindex 42 codiert hat, abgeführt wird.

In Zeile 44 und Zeile 46 der Tabelle in Fig. 2 befinden sich der Herausforderungsindex bzw. der Antwortindex. Der Herausforderungsindex 44 weist als Untereinträge den Decodierertyp (Entschlüsselungsvorrichtungstyp), die Codiererversion, den Decodiererzustand, den Großhändlerindex, den Benutzerindex und Benutzerdaten auf. Sowohl der Herausforderungsindex 44 als auch der Antwortindex 46 sind verschlüsselt.

Das Herausforderungs-Antwort-Verfahren kann verwendet werden, um eine große Datenbank von MMP-Dateien zu erzeugen, welche Multimediadaten enthalten. Die MMP-Datenbank besteht aus MMP-Dateien, die mit einem in dem Untereintrag Schlüssel in dem Verschlüsselungsindex 18 bezeichneten Schlüssel k verschlüsselt sind. Ein Kunde wird auf diese Datenbank zugreifen, indem er zwei Hilfsschlüssel zu derselben sendet. Diese beiden Hilfsschlüssel sind der Benutzerindex u 38 und ein Benutzer-definierter Privatschlüssel p, der auch als der Herausforderungsindex 44 bezeichnet wird. Der Hilfsschlüssel u sowie der Hilfsschlüssel p sind also bei einem Kunden, d.h. bei einer speziellen Entschlüsselungsvorrichtung, vorhanden. Der Kunde sendet nun die beiden Hilfsschlüssel u und p zu einer Datenbank, die eine Vielzahl von MMP-Dateien enthält, um bestimmte Multimediadaten von derselben abzurufen. Die Datenbank, die die Multimediadateien enthält, sendet nun eine MMP-Datei zu dem Kunden zurück, welche den Antwortindex r 46 enthält. Dieser Antwortindex r wird aus der EXKLUSIV-ODER-Verknüpfung des Schlüssels k, des Benutzerindex u und des Herausforderungsindex p berechnet. Die Entschlüsselungsvorrichtung des Kunden empfängt nun die MMP-Datei von der Verschlüsselungsvorrichtung, die die MMP-Datenbank halten kann, wobei diese Datei nun den gerade berechneten Antwortindex 46 enthält. Die Entschlüsselungsvorrichtung ist nun in der Lage, den zur Entschlüsselung der Multimediadaten notwendigen Schlüssel k aus der EXKLUSIV-ODER-Verknüpfung des Antwortindex r, des Benutzerindex u und des Herausforderungsindex p ihrerseits zu berechnen. Somit liegt in der Entschlüsselungsvorrichtung des Kunden/Benutzers der Schlüssel k vor, wodurch dieselbe die dem Bestimmungsdatenblock zugeordneten Multimediadaten entschlüsseln kann.

Bei einem weiteren Ausführungsbeispiel der vorliegenden Erfindung sind die Parameter "u" und "p" nicht direkt die Schlüssel für einen Verschlüsselungsalgorithmus, sondern sie dienen als Einsprungwerte für eine Tabelle, in der die eigentlichen Schlüssel, die zur Ver- bzw. Entschlüsselung verwendet werden sollen, stehen. Die Parameter "u" und "p" selektieren folglich die zu verwendenden Schlüssel.

Der Hintergrund zur Implementierung des Herausforderung-Antwort-Verfahrens liegt in einer effizienten und zeitsparenden Verschlüsselung bzw. Entschlüsselung. Eine Verschlüsselungsvorrichtung hat mit einem Schlüssel k (Verschlüsselungsindex 18, Untereintrag Schlüssel) und mit einem Algorithmus a (Verschlüsselungsindex 18, Untereintrag Verfahren) Multimediadaten geschützt. Diese werden zusammen mit k und a in eine MMP-Datenbank eingespeist. Möchten nun beispielsweise 1000 Kunden diese Multimediadaten beziehen, müßte ohne das Herausforderungs-Antwort-Verfahren die geschützte Kopie der Multimediadaten 1000 mal entschlüsselt und für einen speziellen Kunden wieder verschlüsselt werden. Durch das Herausforderungs-Antwort-Verfahren wird nun ein von einer speziellen Entschlüsselungsvorrichtung abhängiger Herausforderungsindex 44 zusammen mit dem daraus resultierenden Antwortindex 46 in den MMP-Datenbestimmungsblock eingetragen. Der gesamte Datenstrom der Multimediadaten muß also nicht für jeden Kunden einzeln geändert werden. Es ist also einfacher, beispielsweise 1000 mal aus einem Herausforderungsindex 44 einen Antwortindex 46 zu erzeugen und diesen in den Bestimmungsdatenblock einzutragen, als 1000 mal die gesamte MMP-Datei zu entschlüsseln und wieder kundenspezifisch zu verschlüsseln.

Eine Zeile 48 des variablen Teils des Bestimmungsdatenblocks enthält einen Auslaufindex, der das Datum kennzeichnet, zu dem die Lizenz des Benutzers, Multimediadaten zu verwenden, auslaufen wird. Derselbe ist z.B. in Sekunden gegeben, die seit Mitternacht des 1. Januar 1970 vergangen sind. Es wird darauf hingewiesen, daß der Bereich des Auslaufindex etwa bis zum Jahr 2106 ausreichend sein wird. Selbst wenn dieser Eintrag nicht verschlüsselt ist, wird es schwierig sein, denselben zu ändern, da der Auslaufindex ebenfalls die Prüfsumme 20 (den MD5-Fingerabdruck) des Bestimmungsdatenblocks verändern wird, welche zusätzlich noch verschlüsselt ist.

Eine Zeile 50 enthält einen Multimediaindex, welcher bei einem bevorzugten Ausführungsbeispiel ein ISRC-Code (ISRC = International Standard Record Code) sein kann. Dieser Multimediaindex identifiziert jedes einzelne Musikstück nach international anerkannter Norm. Der ISRC-Code identifiziert ebenfalls den Inhaber d.h. den Lieferanten im Sinne dieser Anmeldung, des Musikstücks, der die Urheberrechte besitzt.

In einer Zeile 52 ist schließlich ein Benutzercodeindex vorgesehen, welcher verwendet wird, um ein Musikstück zu identifizieren, welches keinen ISRC-Code, d.h. keinen allgemein gültigen Multimediaindex, besitzt.

Für Fachleute ist es offensichtlich, daß der Bestimmungsdatenblock, insbesondere der variable Teil des Bestimmungsdatenblocks, beliebig erweitert werden kann, um beispielsweise weitere Metainformationen, wie z.B. Informationen über den Interpreten oder Künstler von Multimediadaten, zusammen mit der Multimediadatei zu übertragen und gegebenenfalls zu verschlüsseln. Bei einem bevorzugten Ausführungsbeispiel der vorliegenden Erfindung geht jedem Eintrag 32 bis 52 in dem variablen Teil 30 des Bestimmungsdatenblocks ein Hüllenblock 54 voraus, der in Fig. 4 gezeigt ist. Dieser Hüllenblock liefert Informationen, welcher Eintrag in den variablen Teil 30 des Bestimmungsdatenblocks demselben folgt (Eintragidentifikation), sowie Informationen über die Länge dieses speziellen Eintrags (Eintraglänge). Die Größe des Hüllendatenblocks 54 beträgt jeweils 4 Byte. Dies ist der Grund, daß die Bit-Zahl in der vorletzten Spalte der in Fig. 2 gezeigten Tabelle immer vier Byte kleiner als die in der dritten Spalte gezeigte Bytezahl ist.

Wie bereits angemerkt wurde, zeigen die letzte Spalte der Tabelle von Fig. 1 sowie der Tabelle von Fig. 2 an, ob der entsprechende Eintrag verschlüsselt ist. Die einzigen verschlüsselten Einträge in den variablen Teil des Bestimmungsdatenblocks, die verschlüsselt sind, sind der Freiindex 42, der Herausforderungsindex 44 und der Antwortindex 46. Alle nicht verschlüsselten Einträge sind jedoch zusätzlich durch den Eintrag Prüfsumme 20 in den festen Teil 10 des Bestimmungsdatenblocks geschützt, da die Prüfsumme zum einen verschlüsselt ist und zum anderen durch den MD5-Algorithmus bereits eine kleine Änderung der Eingabe zu einer wesentlichen Änderung des Ergebnisses desselben führen wird.

Für Fachleute ist es offensichtlich, daß z.B. auch fast alle Einträge oder mehr oder weniger als bei dem beschriebenen bevorzugten Ausführungsbeispiel verschlüsselt sein können. Eine Begrenzung der zu verschlüsselnden Daten auf die für einen ausreichenden Schutz notwendige Anzahl führt jedoch zu einer wirtschaftlichen Ausführung der vorliegenden Erfindung, wie es auch im Zusammenhang mit dem Eintrag Mengenindex 32 beschrieben wurde, da es nicht notwendig ist, die gesamten Multimediadaten oder den gesamten Bestimmungsdatenblock, sondern lediglich einen Teil derselben zu verschlüsseln, um das unberechtigte Lesen der gesamten Daten unmöglich zu machen. Ferner ist es für Fachleute offensichtlich, daß es sinnlos ist, den Verschlüsselungsindex 18 selbst zu verschlüsseln, da die Entschlüsselungsvorrichtung zuerst diesen Eintrag lesen muß, um den Algorithmus und potentiell den Schlüssel für den Algorithmus zur Entschlüsselung zu erhalten.

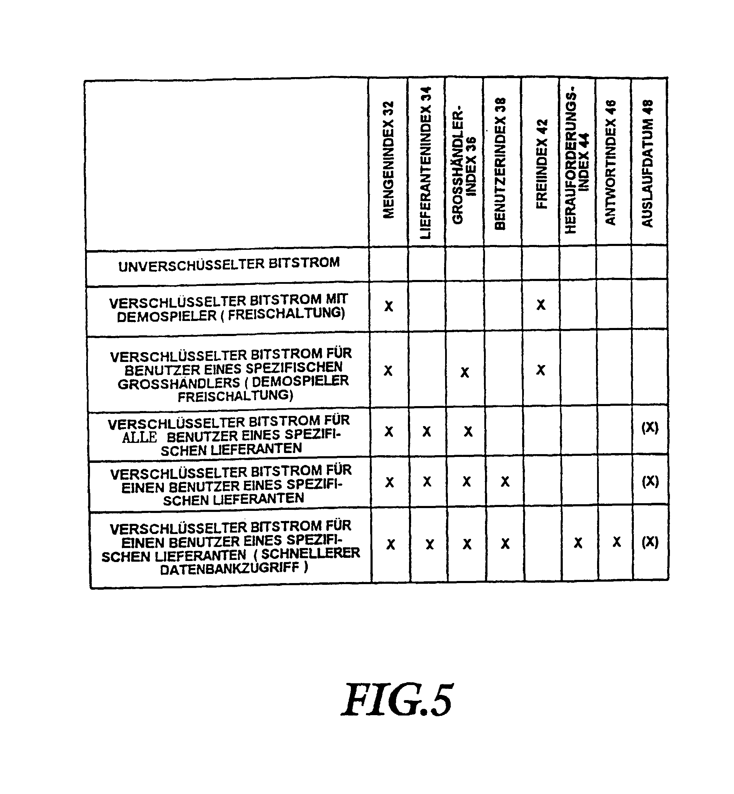

Fig. 5 stellt zusammenfassend einige wichtige Merkmale der vorliegenden Erfindung in der ersten Spalte sowie die dafür notwendigen Einträge in den variablen Teil 30 des Bestimmungsdatenblocks dar. Eine Entschlüsselungsvorrichtung gemäß der vorliegenden Erfindung sollte selbstverständlich auch in der Lage sein, einen unverschlüsselten Bitstrom zu lesen, wobei dann auf die in Fig. 5 aufgeführten Einträge insgesamt verzichtet werden kann. Soll ein verschlüsselter Bitstrom mit einem Demospieler, der die beschriebene Freischaltungsfunktion implementiert, verwendet werden, so muß der Bestimmungsdatenblock der verschlüsselten Multimediadaten zumindest den Freiindex 42 aufweisen.

Wie bereits erwähnt wurde, ist der Mengenindex 32 lediglich für eine effiziente Implementierung des erfindungsgemäßen Verfahrens erforderlich. Möchte ein Großhändler alle seine Benutzer mit seinen Produkten gleichermaßen bedienen, so muß in dem Bestimmungsdatenblock der Multimediadaten der Großhändlerindex 36 besetzt sein. Optional kann auch der Freiindex 42 vorhanden sein, um lediglich bestimmten Benutzern das Abspielen von bestimmten Liedern zu erlauben.

Sollen alle Benutzer in den Genuß von Werken eines speziellen Lieferanten (d.h. des Besitzers des Urheberrechte) kommen können, können der Lieferantenindex und der Großhändlerindex besetzt sein. Optional kann auch ein Auslaufdatum 48 eingetragen sein.

Soll nur ein Benutzer auf ein spezielles Musikstück zugreifen können, so muß zusätzlich zum Lieferantenindex 34 und zum Großhändlerindex 36 der Benutzerindex 38 in den Bestimmungsdatenblock (10, 30) eingetragen sein.

Soll schließlich das beschriebene Herausforderungs-Antwort-Verfahren zum Einsatz kommen, was einen schnellen Zugriff auf eine große Datenbank von MMP-Multimediadateien ermöglicht, so müssen selbstverständlich die Einträge Herausforderungsindex 44 sowie Antwortindex 46 besetzt sein. Für Fachleute ist es offensichtlich, daß die Freischaltung durch den Freiindex 42 bei einem Demospieler und beispielsweise das Herausforderungs-Antwort-Verfahren beliebig kombiniert werden können.

Die erfindungsgemäße Verschlüsselung bzw. Entschlüsselung liefert also eine Möglichkeit, um Multimediadaten bereits unmittelbar nach ihrer Erzeugung vor unerlaubtem Zugriff zu schützen, wobei die gesamte Kette vom Erzeuger zum Konsumenten einschließlich der Lagerung abgedeckt ist. Die vorliegende Erfindung zeichnet sich insbesondere durch die möglichen Merkmale der Teilverschlüsselung, der Erweiterbarkeit, d.h. der variable Teil des Bestimmungsdatenblocks kann beliebige weitere Funktionen aufnehmen, der maximalen Sicherheit gegen Fälschungen (d.h. die Prüfsumme 20) und der Verschlüsselung bestimmter Einträge in dem Bestimmungsdatenblock auf. Damit sind sowohl ein Schutz gegen eine unerlaubte Verwendung von Multimediadaten als auch durch Verwendung des Herausforderungs-Antwort-Gedankens eine effiziente Implementierung der Erfindung erreicht.

## Patentansprüche

1. Verfahren zum Verschlüsseln von Multimediadaten, um eine verschlüsselte Multimediadatei zu erhalten, die einen Bestimmungsdatenblock (10, 30) und einen Multimediadatenblock aufweist, mit folgenden Schritten:
Eintragen eines Bestimmungsdaten-Verschlüsselungsindex (18) in den Bestimmungsdatenblock (10, 30), welcher auf einen zum Verschlüsseln eines Abschnitts des Bestimmungsdatenblocks (10, 30) zu verwendenden Bestimmungsdaten-Verschlüsselungsalgorithmus hinweist;
Eintragen eines Multimediadaten-Verschlüsselungsindex (34, 36, 38, 44, 46) in den Bestimmungsdatenblock (10, 30), welcher auf einen zum Verschlüsseln zumindest eines Teils des Multimediadatenblocks zu verwendenden Multimediadaten-Verschlüsselungsalgorithmus hinweist;
Eintragen eines Freiindex (42) in den Bestimmungsdatenblock (10, 30), wobei der Freiindex (42) eine bestimmte Entschlüsselungsvorrichtung identifiziert, mit der ein Entschlüsseln der verschlüsselten Multimediadaten über eine vorbestimmte Zeitdauer hinaus möglich ist;
Auswählen des Bestimmungsdaten-Verschlüsselungsalgorithmus aus einer Mehrzahl von Verschlüsselungsalgorithmen aufgrund des Bestimmungsdaten-Verschlüsselungsindex (18);
Auswählen des Multimediadaten-Verschlüsselungsalgorithmus aus einer Mehrzahl von Verschlüsselungsalgorithmen aufgrund des Multimediadaten-Verschlüsselungsindex (34, 36, 38, 44, 46);
Verschlüsseln des Abschnitts des Bestimmungsdatenblocks (10, 30) mit dem Bestimmungsdaten-Verschlüsselungsalgorithums, wobei der Abschnitt des Bestimmungsdatenblocks (10, 30) den Bestimmungsdaten-Verschlüsselungsindex nicht aufweist; und
zumindest teilweises Verschlüsseln des Multimediadatenblocks mit dem Multimediadaten-Verschlüsselungsalgorithmus.

2. Verfahren gemäß Anspruch 1,
bei dem der Bestimmungsdatenblock (10, 30) vor den Multimediadatenblock in eine Datei geschrieben wird.

3. Verfahren gemäß Anspruch 1 oder 2, das ferner folgenden Schritt aufweist:
Eintragen eines Mengenindex (32) in den Bestimmungsdatenblock (10, 30), der einen Anteil der zu verschlüsselnden Multimediadaten von der Gesamtheit der Multimediadaten in dem Multimediadatenblock anzeigt, wodurch lediglich der durch den Mengenindex (32) bezeichnete Anteil der Multimediadaten mittels des Multimediadaten-Verschlüsselungsalgorithmus verschlüsselt wird.

4. Verfahren gemäß einem beliebigen der vorhergehenden Ansprüche, das ferner folgenden Schritt aufweist:
Eintragen eines Lieferantenindex (34) in den Bestimmungsdatenblock (10, 30), der den Lieferanten anzeigt, der die Urherberrechte für die Multimediadaten besitzt.

5. Verfahren gemäß einem beliebigen der vorhergehenden Ansprüche, das ferner folgenden Schritt aufweist:
Eintragen eines Großhändlerindex (36) in den Bestimmungsdatenblock (10, 30), der den Großhändler anzeigt, der die Multimediadaten anbietet.

6. Verfahren gemäß einem beliebigen der vorhergehenden Ansprüche, das ferner folgenden Schritt aufweist:
Eintragen eines Benutzerindex (38) in den Bestimmungsdatenblock (10, 30), der den Benutzer anzeigt, zu dem die Multimediadaten geliefert werden sollen.

7. Verfahren gemäß Anspruch 6, das ferner folgenden Schritt aufweist:
Eintragen eines Herausforderungsindex (44) und eines Antwortindex (46) in den Bestimmungsdatenblock (10, 30), wobei der Herausforderungsindex (44) und der Benutzerindex (38) zum Benutzer-selektiven Abrufen von Multimediadaten verwendet werden und zusammen mit dem Antwortindex (46) zum Entschlüsseln mittels eines zu verwendenden Entschlüsselungsalgorithmus verwendet werden, wobei aus dem Antwortindex (46) in Verbindung mit dem Benutzerindex (38) und dem Herausforderungsindex (44) ein Schlüssel (k) für den Entschlüsselungsalgorithmus zum Entschlüsseln bestimmt wird.

8. Verfahren gemäß Anspruch 7, das ferner folgenden Schritt aufweist:
Eintragen eines Flagindex (40) in den Bestimmungsdatenblock (10, 30), der anzeigt, ob bei der Verschlüsselung der Großhändlerindex (36), der Großhändlerindex (36) und der Benutzerindex (38) oder der Herausforderungsindex (44) und der Antwortindex (46) verwendet werden sollen.

9. Verfahren gemäß einem beliebigen der vorhergehenden Ansprüche, das ferner folgenden Schritt aufweist:
Eintragen eines Auslaufindex (48) in den Bestimmungsdatenblock (10, 30), der anzeigt, wann eine Lizenz eines Benutzers zum Abrufen der Multimediadaten ausläuft.

10. Verfahren gemäß einem beliebigen der vorhergehenden Ansprüche, das ferner folgenden Schritt aufweist:
Eintragen eines Multimediaindex (50) in den Bestimmungsdatenblock (10, 30), der einzelne Musikstücke nach internationalem Standard identifiziert.

11. Verfahren gemäß Anspruch 10, das ferner folgenden Schritt aufweist:
Eintragen eines Benutzercodeindex (52) in den Bestimmungsdatenblock (10, 30), der Musikstücke identifiziert, die keinen Multimediaindex (50) aufweisen.

12. Verfahren gemäß einem beliebigen der vorhergehenden Ansprüche, das ferner folgenden Schritt aufweist:
Eintragen eines Dateiindex (12) in den Bestimmungsdatenblock (10, 30), der die durch das Verschlüsselungsverfahren erzeugte Multimediadatei, die den Bestimmungsdatenblock (10, 30) und den Multimediadatenblock aufweist, allgemein kennzeichnet.

13. Verfahren gemäß einem beliebigen der vorhergehenden Ansprüche, das ferner folgenden Schritt aufweist:
Eintragen eines Lägenindex (14) in den Bestimmungsdatenblock (10, 30), der die Länge des Bestimmungsdatenblocks (10, 30) anzeigt.

14. Verfahren gemäß Anspruch 13, das ferner folgenden Schritt aufweist:
Eintragen eines Versatz index in den Bestimmungsdatenblock (10, 30), der einen Versatz zu einem möglichen weiteren Bestimmungsdatenblock (10, 30) in der verschlüsselten Multimediadatei anzeigt.

15. Verfahren gemäß einem beliebigen der vorhergehenden Ansprüche, das ferner folgenden Schritt aufweist:
Eintragen einer Prüfsumme (20) des Bestimmungsdatenblocks (10, 30) in den Bestimmungsdatenblock (10, 30).

16. Verfahren gemäß Anspruch 15, das ferner folgenden Schritt aufweist:
Verschlüsseln der Prüfsumme (20), des Freiindex (42), des Herausforderungsindex (44) und des Antwortindex (46); und
Eintragen der verschlüsselten Indizes in den Bestimmungsdatenblock (10, 30).

17. Verfahren gemäß Anspruch 15 oder 16,
bei dem der Dateiindex (12), der Längenindex (14), der Versatzindex (16), der Verschlüsselungsindex (18) und die Prüfsumme (20) in einem festen Teil des Bestimmungsdatenblocks vorhanden sind, während sich der Mengenindex (32), der Lieferantenindex (34), der Großhändlerindex (36), der Benutzerindex (38), der Flagindex (40), der Freiindex (42), der Herausforderungsindex (44), der Antwortindex (46), der Auslaufindex (48), der Multimediaindex (50) und der Benutzercodeindex (52) in einem variablen Teil (30) des Bestimmungsdatenblocks (10, 30) befinden.

18. Verfahren gemäß Anspruch 17,
bei dem jedem Eintrag in den variablen Teil (30) ein Hüllenblock (54) vorausgeht, der einen demselben folgenden Eintrag und dessen Länge spezifiziert.

19. Verfahren zum Entschlüsseln von Multimediadaten, die nach Anspruch 1 verschlüsselt sind, mit folgenden Schritten:
Lesen des Bestimmungsdatenblocks (10, 30);
Auswählen eines Bestimmungsdaten-Entschlüsselungsalgorithmus aus einer Mehrzahl von Entschlüsselungsalgorithmen aufgrund des Bestimmungsdaten-Verschlüsselungsindex (18);
Auswählen eines Multimediadaten-Entschlüsselungsalgorithmus aus einer Mehrzahl von Entschlüsselungsalgorithmen aufgrund des Multimediadaten-Verschlüsselungsindex (18);
Entschlüsseln des verschlüsselten Abschnitts des Bestimmungsdatenblocks (10, 30) unter Verwendung des Bestimmungsdaten-Entschlüsselungsalgorithmus; und
Entschlüsseln des Multimediadatenblocks unter Verwendung des ausgewählten Multimediadaten-Entschlüsselungsalgorithmus, wobei der Schritt des Entschlüsselns des Multimediadatenblocks nur dann über eine vorbestimmte Zeitdauer hinaus fortgesetzt wird, wenn die Vorrichtung zum Entschlüsseln eine für den Freiindex (42) geeignete Einstellung aufweist.

20. Verfahren nach Anspruch 19 zum Entschlüsseln von Multimediadaten, die nach Anspruch 1, 2 und 3 verschlüsselt sind,
bei dem lediglich der Anteil der Multimediadaten in dem Multimediadatenblock entschlüsselt wird, der durch den Mengenindex (32) angezeigt ist.

21. Verfahren gemäß einem der Ansprüche 19 oder 20, zum Entschlüsseln von Multimediadaten, die nach Anspruch 1 bis 4 verschlüsselt sind,
bei dem der Schritt des Entschlüsselns des Multimediadatenblocks nur dann durchgeführt wird, wenn ein Benutzer Produkte eines durch den Lieferantenindex (36) gekennzeichneten Lieferanten verwenden darf.

22. Verfahren gemäß einem der Ansprüche 19 bis 21 zum Entschlüsseln von Multimediadaten, die nach Anspruch 1 bis 5 verschlüsselt sind,
bei dem der Schritt des Entschlüsselns des Multimediadatenblocks nur dann durchgeführt wird, wenn ein Benutzer bei dem durch den Großhändlerindex (36) bezeichneten Großhändler autorisiert ist, Produkte desselben zu verwenden.

23. Verfahren nach einem der Ansprüche 19 bis 22 zum Entschlüsseln von Multimediadaten, die nach Anspruch 6 verschlüsselt sind,
bei dem der Schritt des Entschlüsseln des Multimediadatenblocks nur dann durchgeführt wird, wenn der durch den Benutzerindex (38) gekennzeichnete Benutzer die Multimediadaten entschlüsselt.

24. Verfahren gemäß Anspruch 19 bis 23 zum Entschlüsseln von Multimediadaten, die nach Anspruch 7 verschlüsselt sind,
bei dem der Schritt des Entschlüsselns des Multimediadatenblocks das Berechnen eines für den ausgewählten Entschlüsselungsalgorithmus nötigen Entschlüsselungsschlüssel aufweist, der sich aus einer Kombination des Benutzerindex (38), des Herausforderungsindex (44) und des Antwortindex (46) ergibt.

25. Vorrichtung zum Verschlüsseln von Multimediadaten, um eine verschlüsselte Multimediadatei zu erhalten, die einen Bestimmungsdatenblock (10, 30) und einen Multimediadatenblock aufweist, mit folgenden Merkmalen:
einer Einrichtung zum Eintragen eines Bestimmungsdaten-Verschlüsselungsindex (18) in den Bestimmungsdatenblock (10, 30), wobei der Bestimmungsdaten-Verschlüsselungsindex (18) auf einen zum Verschlüsseln eines Abschnitts des Bestimmungsdatenblocks (10, 30) zu verwendenden Bestimmungsdaten-Verschlüsselungsalgorithmus hinweist;
einer Einrichtung zum Eintragen eines Multimediadaten-Verschlüsselungsindex (34, 36, 38, 44, 46) in den Bestimmungsdatenblock (10, 30), wobei der Multimediadaten-Verschlüsselungsindex (34, 36, 38, 44, 46) auf einen zum Verschlüsseln zumindest eines Anteils des Multimediadatenblocks zu verwendenden Multimediadaten-Verschlüsselungsalgorithmus hinweist;
einer Einrichtung zum Eintragen eines Freiindex (42) in den Bestimmungsdatenblock (10, 30), wobei der Freiindex (42) die Vorrichtung zum Entschlüsseln identifiziert, mit der ein Entschlüsseln der verschlüsselten Multimediadaten über eine vorbestimmte Zeitdauer hinaus möglich ist;
einer Einrichtung zum Auswählen des Bestimmungsdaten-Verschlüsselungsalgorithmus aus einer Mehrzahl von Verschlüsselungsalgorithmen aufgrund des Bestimmungsdaten-Verschlüsselungsindex (18);
einer Einrichtung zum Auswählen des Multimediadaten-Verschlüsselungsalgorithmus aus einer Mehrzahl von Verschlüsselungsalgorithmen aufgrund des Multimediadaten-Verschlüsselungsindex (34, 36, 38, 44, 46);
einer Einrichtung zum Verschlüsseln des Abschnitts des Bestimmungsdatenblocks (10, 30) mit dem Bestimmungsdaten-Verschlüsselungsalgorithums, wobei der Abschnitt des Bestimmungsdatenblocks (10, 30) den Bestimmungsdaten-Verschlüsselungsindex nicht aufweist; und
einer Einrichtung zum zumindest teilweisen Verschlüsseln des Multimediadatenblocks mit dem Multimediadaten-Verschlüsselungsalgorithmus.

26. Vorrichtung zum Verschlüsseln nach Anspruch 25, die ferner folgende Merkmale aufweist:
eine Einrichtung zum Eintragen eines Benutzerindex (38), der den Benutzer anzeigt, der die Multimediadaten benutzen kann, eines Herausforderungsindex (44) und eines Antwortindex (46) in einen Bestimmungsdatenblock (10, 30); und
eine Einrichtung zum Berechnen des Antwortindex (46) aus dem Benutzerindex (38), dem Herausforderungsindex (44) und einem für eine Verschlüsselungsvorrichtung spezifischen Schlüssels.

27. Vorrichtung zum Entschlüsseln von Multimediadaten, die nach Anspruch 1 verschlüsselt sind, mit folgenden Merkmalen:
einer Einrichtung zum Lesen des Bestimmungsdatenblocks (10, 30);
einer Einrichtung zum Auswählen eines Bestimmungsdaten-Entschlüsselungsalgorithmus aus einer Mehrzahl von Entschlüsselungsalgorithmen aufgrund des Bestimmungsdaten-Verschlüsselungsindex (18);
einer Einrichtung zum Auswählen eines Multimediadaten-Entschlüsselungsalgorithmus aus einer Mehrzahl von Entschlüsselungsalgorithmen aufgrund des Multimediadaten-Verschlüsselungsindex (18);
einer Einrichtung zum Entschlüsseln des verschlüsselten Abschnitts des Bestimmungsdatenblocks (10, 30) unter Verwendung des Bestimmungsdaten-Entschlüsselungsalgorithmus; und
einer Einrichtung zum Entschlüsseln des Multimediadatenblocks unter Verwendung des ausgewählten Multimediadaten-Entschlüsselungsalgorithmus, wobei die Vorrichtung zum Entschlüsseln der Multimediadaten nur dann über eine vorbestimmte Zeitdauer hinaus den Multimediadatenblock entschlüsselt, wenn die Vorrichtung eine für den Freiindex (42) geeignete Einstellung aufweist.

28. Vorrichtung zum Entschlüsseln nach Anspruch 27,
die ferner eine Einrichtung zum Berechnen eines Schlüssels für den ausgewählten Multimediadaten-Entschlüsselungsalgorithmus aus einer Kombination eines in dem Bestimmungsdatenblock (10, 30) vorhandenen Benutzerindex (38), eines in demselben vorhandenen Herausforderungsindex (44) und eines in demselben vorhandenen Antwortindex (46) aufweist.

## Claims

1. A method for ciphering multimedia data to obtain an ciphered multimedia file having a definition data block (10, 30) and a multimedia data block, comprising the following steps:
entering a definition data ciphering index (18) in the definition data block (10, 30) which points to a definition data ciphering algorithm to be used for ciphering a section of the definition data block (10, 30);
entering a multimedia data ciphering index (34, 36, 38, 44, 46) in the definition data block (10, 30) which points to a multimedia data ciphering algorithm to be used for ciphering at least part of the multimedia data block;
entering a free index (42) in the definition data block (10, 30), the free index (42) identifying a particular deciphering device with which the ciphered multimedia data can be deciphered beyond a specified period of time;
selecting the definition data ciphering algorithm from a plurality of ciphering algorithms on the basis of the definition data ciphering index (18);
selecting the multimedia data ciphering algorithm from a plurality of ciphering algorithms on the basis of the multimedia data ciphering index (34, 36, 38, 44, 46);
ciphering the section of the definition data block (10, 30) with the definition data ciphering algorithm, the section of the definition data block (10, 30) not including the definition data ciphering index; and
at least partially ciphering the multimedia data block with the multimedia data ciphering algorithm.

2. A method according to claim 1, wherein
the definition data block (10, 30) is written into a file before the multimedia data block;

3. A method according to claim 1 or 2, which also comprises the following step:
entering a block size index (32) in the definition data block (10, 30) which, from the totality of the multimedia data in the multimedia data block, indicates part of the multimedia data to be ciphered, whereby only that part of the multimedia data denoted by the block size index (32) will be ciphered by means of the multimedia data ciphering algorithm.

4. A method according to any one of the preceding claims, that also comprises the following step:
entering a provider index (34) in the definition data block (10, 30) which indicates the provider who holds the copyrights for the multimedia data.

5. A method according to any one of the preceding claims, that also comprises the following step:
entering a distributor index (36) in the definition data block (10, 30) which indicates the distributor offering the multimedia data.

6. A method according to any one of the preceding claims, that also comprises the following step:
entering a user index (38) in the definition data block (10, 30) which indicates the user to whom the multimedia data are to be delivered.

7. A method according to claim 6, that also comprises the following step:
entering a challenge index (44) and a response index (46) in the definition data block (10, 30), where the challenge index (44) and the user index (38) are used for the user-selective retrieval of multimedia data and, together with the response index (46), are used for deciphering by means of a deciphering algorithm to be used, where a key (k) for the ciphering algorithm is determined for deciphering from the response index (46) in conjunction with the user index (38) and the challenge index (44).

8. A method according to claim 7, that also comprises the following step:
entering a flag index (40) in the definition data block (10, 30) which indicates whether the distributor index (36), the distributor index (36) and the user index (38) or the challenge index (44) and the response index (46) are to be used in the ciphering.

9. A method according to any one of the preceding claims, that also comprises the following step:
entering an expiry index (48) in the definition data block (10, 30) which indicates when a user's licence to retrieve the multimedia data expires.

10. A method according to any one of the preceding claims, that also comprises the following step:
entering a multimedia index (50) in the definition data block (10, 30) which identifies individual pieces of music according to international standard.

11. A method according to claim 10, that also comprises the following step:
entering a user code index (52) in the definition data block (10, 30) which identifies pieces of music which do not have a multimedia index (50).

12. A method according to any one of the preceding claims, that also comprises the following step:
entering a file index (12) in the definition data block (10, 30) which provides a general description of the multimedia file created by the ciphering method and comprising the definition data block (10, 30) and the multimedia data block.

13. A method according to any one of the preceding claims, that also comprises the following step:
entering a length index (14) in the definition data block (10, 30) which indicates the length of the definition data block (10, 30).

14. A method according to claim 13, that also comprises the following step:
entering an offset index in the definition data block (10, 30) which indicates an offset to a possible further definition data block (10, 30) in the ciphered multimedia file.

15. A method according to any one of the preceding claims, that also comprises the following step:
entering a checksum (20) of the definition data block (10, 30) in the definition data block (10, 30).

16. A method according to claim 15, that also comprises the following step:
ciphering the checksum (20), the free index (42), the challenge index (44) and the response index (46); and
entering the ciphered indexes in the definition data block (10, 30).

17. A method according to claim 15 or 16, wherein
the file index (12), the length index (14), the offest index (16), the ciphering index (18) and the checksum (20) are present in a fixed part (10) of the definition data block (10, 30) while the block size index (32), the provider index (34), the distributor index (36), the user index (38), the flag index (40), the free index (42), the challenge index (44), the response index (46), the expiry index (48), the multimedia index (50) and the user code index (52) are located in a variable part (30) of the definition data block (10, 30).

18. A method according to claim 17, wherein
each entry in the variable part (30) is preceded by an envelope block (54) which specifies the entry following it and the length thereof.

19. A method for deciphering multimedia data which have been ciphered according to claim 1, comprising the following steps:
reading the definition data block (10, 30);
selecting a definition data deciphering algorithm from a plurality of deciphering algorithms on the basis of the definition data ciphering index (18);
selecting a multimedia data deciphering algorithm from a plurality of deciphering algorithms on the basis of the multimedia data ciphering index (18);
deciphering the ciphered section of the definition data block (10, 30) using the definition data deciphering algorithm; and
deciphering the multimedia data block using the selected multimedia data deciphering algorithm, where the step of deciphering the multimedia data block is only continued beyond a specified period of time if the device for deciphering has a setting which is appropriate for the free index (42).

20. A method according to claim 19 for deciphering multimedia data which have been ciphered according to claims 1, 2 and 3, wherein
only that part of the multimedia data in the multimedia data block is deciphered which is indicated by the amount index (32).

21. A method according to one of the claims 19 or 20 for deciphering multimedia data which have been ciphered according to claims 1 to 4, wherein
the step of deciphering the multimedia data block is only performed if a user is entitled to use products of a provider who is identified by the provider index (36).

22. A method according to one of the claims 19 to 21 for deciphering multimedia data which have been ciphered according to claims 1 to 5, wherein
the step of deciphering the multimedia data block is only performed if a user is authorized by the distributor specified by the distributor index (36) to use his products.

23. A method according to one of the claims 19 to 22 for deciphering multimedia data which have been ciphered according to claim 6, wherein
the step of deciphering the multimedia data block is only performed if the user identified by the user index (38) deciphers the multimedia data.

24. A method according to one of the claims 19 to 23 for deciphering multimedia data which have been ciphered according to claim 7, wherein
the step of deciphering the multimedia data block involves the calculation of a deciphering key required for the selected deciphering algorithm, the key resulting from a combination of the user index (38), the challenge index (44) and the response index (46).

25. A device for ciphering multimedia data to obtain an ciphered multimedia file having a definition data block (10, 30) and a multimedia data block, comprising the following features:
means for entering a definition data ciphering index (18) in the definition data block (10, 30), the definition data ciphering index (18) pointing to a definition data ciphering algorithm to be used for ciphering a section of the definition data block (10, 30);
means for entering a multimedia data ciphering index (34, 36, 38, 44, 46) in the definition data block (10, 30), the multimedia data ciphering index (34, 36, 38, 44, 46) pointing to a multimedia data ciphering algorithm to be used for ciphering at least part of the multimedia data block;
means for entering a free index (42) in the definition data block (10, 30), the free index (42) identifying the device for deciphering with which the ciphered multimedia data can be deciphered beyond a specified period of time;
means for selecting the definition data ciphering algorithm from a plurality of ciphering algorithms on the basis of the definition data ciphering index (18);
means for selecting the multimedia data ciphering algorithm from a plurality of ciphering algorithms on the basis of the multimedia data ciphering index (34, 36, 38, 44, 46);
means for ciphering the section of the definition data block (10, 30) with the definition data ciphering algorithm, the section of the definition data block (10, 30) not including the definition data ciphering index (18); and
means for at least partially ciphering the multimedia data block with the multimedia data ciphering algorithm.

26. A device for ciphering according to claim 25, comprising the following features as well:
means for entering a user index (38), which indicates the user who can use the multimedia data, a challenge index (44) and a response index (46) in a definition data block (10, 30); and
means for calculating the response index (46) from the user index (38), the challenge index (44) and a key which is specific for an ciphering device.

27. A device for deciphering multimedia data which have been ciphered according to claim 1, comprising the following features:
means for reading the definition data block (10, 30);
means for selecting a definition data deciphering algorithm from a plurality of deciphering algorithms on the basis of the definition data ciphering index (18);
means for selecting a multimedia data deciphering algorithm from a plurality of deciphering algorithms on the basis of the multimedia data ciphering index (18);
means for deciphering the ciphered section of the definition data block (10, 30) using the definition data deciphering algorithm; and
means for deciphering the multimedia data block using the selected multimedia data deciphering algorithm, where the device for deciphering the multimedia data only continues to decipher the multimedia data block beyond a specified period of time if the device has a setting which is appropriate for the free index (42).

28. A device for deciphering according to claim 27,
which also has means for calculating a key for the selected multimedia data deciphering algorithm from a combination of a user index (38), a challenge index (44) and a response index (46), all of which are present in the definition data block (10, 30).

## Revendications

1. Procédé de cryptage de données multimédias, pour obtenir un fichier de données multimédias présentant un bloc de données de détermination (10, 30) et un bloc de données multimédias, aux étapes suivantes consistant à :
entrer dans le bloc de données de détermination (10, 30) un indice de cryptage de données de détermination (18) renvoyant à un algorithme de cryptage de données de détermination à utiliser pour le cryptage d'un segment du bloc de données de détermination (10, 30);
entrer dans le bloc de données de détermination (10, 30) un indice de cryptage de données multimédias (34, 36, 38, 44, 46) renvoyant à un algorithme de cryptage de données multimédias à utiliser pour le cryptage d'au moins une partie du bloc de données multimédias;
entrer dans le bloc de données de détermination (10, 30) un indice libre (42), l'indice libre (42) identifiant un dispositif de décryptage déterminé par lequel est possible un décryptage des données multimédias encryptées au-delà d'un laps de temps prédéterminé;
sélectionner l'algorithme de cryptage de données de détermination parmi une pluralité d'algorithmes de cryptage, sur base de l'indice de cryptage de données de détermination (18);
sélectionner l'algorithme de cryptage de données multimédias parmi une pluralité d'algorithmes de cryptage, sur base de l'indice de cryptage de données multimédias (34, 36, 38, 44, 46) ;
encrypter le segment du bloc de données de détermination (10, 30) par l'algorithme de cryptage de données de détermination, le segment du bloc de données de détermination (10, 30) ne présentant pas l'indice de cryptage de données de détermination ; et
encrypter au moins partiellement le bloc de données multimédias par l'algorithme de cryptage de données multimédias.

2. Procédé suivant la revendication 1, dans lequel le bloc de données de détermination (10, 30) est entré dans un fichier de données avant le bloc de données multimédias.

3. Procédé suivant la revendication 1 ou 2, présentant, par ailleurs, l'étape suivante consistant à :
entrer dans le bloc de données de détermination (10, 30) un indice de quantité (32) indiquant une partie des données multimédias à encrypter de l'ensemble des données multimédias dans le bloc de données multimédias, d'où seule la partie des données multimédias désignée par l'indice de quantité (32) est encryptée à l'aide de l'algorithme de cryptage de données multimédias.

4. Procédé suivant l'une quelconque des revendications précédentes, présentant, par ailleurs, l'étape suivante consistant à :
entrer dans le bloc de données de détermination (10, 30) un indice de fournisseur (34) indiquant le fournisseur qui possède les droits d'auteur pour les données multimédias.

5. Procédé suivant l'une quelconque des revendications précédentes, présentant, par ailleurs, l'étape suivante consistant à :
entrer dans le bloc de données de détermination (10, 30) un indice de grossiste (36) indiquant le grossiste offrant les données multimédias.

6. Procédé suivant l'une quelconque des revendications précédentes, présentant, par ailleurs, l'étape suivante consistant à :
entrer dans le bloc de données de détermination (10, 30) un indice d'utilisateur (38) indiquant l'utilisateur auquel devront être fournies les données multimédias.

7. Procédé suivant la revendication 6, présentant, par ailleurs, l'étape suivante consistant à :
entrer dans le bloc de données de détermination (10, 30) un indice de défi (44) et un indice de réponse (46), l'indice de défi (44) et l'indice d'utilisateur (38) étant utilisés pour un appel de données multimédias sélectif de l'utilisateur et étant utilisés ensemble avec l'indice de réponse (46) pour le décryptage à l'aide d'un algorithme de décryptage à utiliser, à partir de l'indice de réponse (46), en rapport avec l'indice d'utilisateur (38) et l'indice de défi (44) étant déterminée, pour le décryptage, une clef (k) pour l'algorithme de décryptage.

8. Procédé suivant la revendication 7, présentant, par ailleurs, l'étape suivante consistant à :
entrer dans le bloc de données de détermination (10, 30) un indice de drapeau (40) indiquant si lors du cryptage sont utilisés l'indice de grossiste (36), l'indice de grossiste (36) et l'indice d'utilisateur (38) ou l'indice de défi (44) et l'indice de réponse (46).

9. Procédé suivant l'une quelconque des revendications précédentes, présentant, par ailleurs, l'étape suivante consistant à :
entrer dans le bloc de données de détermination (10, 30) un indice d'expiration (48) indiquant quand expire une licence d'un utilisateur pour appeler les données multimédias.

10. Procédé suivant l'une quelconque des revendications précédentes, présentant, par ailleurs, l'étape suivante consistant à :
entrer dans le bloc de données de détermination (10, 30) un indice multimédias (50) qui identifie des oeuvres musicales individuelles selon une norme internationale.

11. Procédé suivant la revendication 10, présentant, par ailleurs, l'étape suivante consistant à :
entrer dans le bloc de données de détermination (10, 30) un indice d'utilisateur (52) identifiant des oeuvres musicales qui ne présentent pas d'indice multimédias (50).

12. Procédé suivant l'une quelconque des revendications précédentes, présentant, par ailleurs, l'étape suivante consistant à :
entrer dans le bloc de données de détermination (10, 30) un indice de fichier de données (12) caractérisant généralement le fichier de données multimédias généré par le procédé de cryptage et présentant le bloc de données de détermination (10, 30) et le bloc de données multimédias.

13. Procédé suivant l'une quelconque des revendications précédentes, présentant, par ailleurs, l'étape suivante consistant à :
entrer dans le bloc de données de détermination (10, 30) un indice de longueur (14) indiquant la longueur du bloc de données de détermination (10, 30).

14. Procédé suivant la revendication 13, présentant, par ailleurs, l'étape suivante consistant à :
entrer dans le bloc de données de détermination (10, 30) un indice de décalage indiquant un décalage par rapport à un possible autre bloc de données de détermination (10, 30) dans le fichier de données multimédias encryptées.

15. Procédé suivant l'une quelconque des revendications précédentes, présentant, par ailleurs, l'étape suivante consistant à :
entrer dans le bloc de données de détermination (10, 30) une somme de contrôle (20) du bloc de données de détermination (10, 30).

16. Procédé suivant la revendication 15, présentant, par ailleurs, l'étape suivante consistant à :
encrypter la somme de contrôle (20), l'indice libre (42), l'indice de défi (44) et l'indice de réponse (46) ; et
entrer dans le bloc de données de détermination (10, 30) les indices encryptés.

17. Procédé suivant la revendication 15 ou 16, dans lequel l'indice de fichier de données (12), l'indice de longueur (14), l'indice de décalage (16), l'indice de cryptage (18) et la somme de contrôle (20) sont présents dans une partie fixe du bloc de données de détermination, tandis que l'indice de quantité (32), l'indice de fournisseur (34), l'indice de grossiste (36), l'indice d'utilisateur (38), l'indice de drapeau (40), l'indice libre (42), l'indice de défi (44), l'indice de réponse (46), l'indice d'expiration (48), l'indice multimédias (50) et l'indice de code d'utilisateur (52) se trouvent dans une partie variable (30) du bloc de données de détermination (10, 30).

18. Procédé suivant la revendication 17, dans lequel chaque entrée dans la partie variable (30) est précédée d'un bloc de pochette (54) qui spécifie une entrée suivant celui-ci et sa longueur.

19. Procédé de décryptage de données multimédias encryptées suivant la revendication 1, aux étapes suivantes consistant à :
lire le bloc de données de détermination (10, 30) ;
sélectionner un algorithme de décryptage de données de détermination parmi une pluralité d'algorithmes de décryptage sur base de l'indice de cryptage de données de détermination (18) ;
sélectionner un algorithme de décryptage de données multimédias parmi une pluralité d'algorithmes de décryptage sur base de l'indice de cryptage de données multimédias (18) ;
décrypter le segment encrypté du bloc de données de détermination (10, 30) en utilisant l'algorithme de décryptage de données de détermination ; et
décrypter le bloc de données multimédias en utilisant l'algorithme de décryptage de données multimédias sélectionné, l'étape de décryptage du bloc de données multimédias n'étant poursuivie au-delà d'un laps de temps prédéterminé que lorsque le dispositif de décryptage présente un réglage approprié pour l'indice libre (42).

20. Procédé suivant la revendication 19 de décryptage de données multimédias encryptées suivant les revendications 1, 2 et 3, dans lequel seule la partie des données multimédias dans le bloc de données multimédias indiquée par l'indice de quantité (32) est décryptée.

21. Procédé suivant l'une des revendications 19 ou 20 de décryptage de données multimédias encryptées suivant les revendications 1 à 4, dans lequel l'étape de décryptage du bloc de données multimédias n'est réalisée que lorsqu'un utilisateur peut utiliser des produits d'un fournisseur caractérisé par l'indice de fournisseur (36).

22. Procédé suivant l'une des revendications 19 à 21 de décryptage de données multimédias encryptées suivant les revendications 1 à 5, dans lequel l'étape de décryptage du bloc de données multimédias n'est réalisée que lorsqu'un utilisateur est autorisé à utiliser, auprès du grossiste désigné par l'indice de grossiste (36), des produits de ce dernier.

23. Procédé suivant l'une des revendications 19 à 22 de décryptage de données multimédias encryptées suivant la revendication 6, dans lequel l'étape de décryptage du bloc de données multimédias n'est réalisée que lorsque l'utilisateur désigné par l'indice d'utilisateur (38) décrypte les données multimédias.

24. Procédé suivant l'une des revendications 19 à 23 de décryptage de données multimédias encryptées suivant la revendication 7, dans lequel l'étape de décryptage du bloc de données multimédias présente le calcul d'une clef de décryptage nécessaire pour l'algorithme de décryptage sélectionné, laquelle résulte d'une combinaison de l'indice d'utilisateur (38), de l'indice de défi (44) et de l'indice de réponse (46).

25. Dispositif de cryptage de données multimédias, pour obtenir un fichier de données multimédias encryptées présentant un bloc de données de détermination (10, 30) et un bloc de données multimédias, aux caractéristiques suivantes :
un dispositif d'entrée dans le bloc de données de détermination (10, 30) d'un indice de cryptage de données de détermination (18), l'indice de cryptage de données de détermination (18) indiquant un algorithme de cryptage de données de détermination à utiliser pour le cryptage d'un segment du bloc de données de détermination (10, 30) ;
un dispositif d'entrée dans le bloc de données de détermination (10, 30) d'un indice de cryptage de données multimédias (34, 36, 38, 44, 46), l'indice de cryptage de données multimédias (34, 36, 38, 44, 46) indiquant un algorithme de cryptage de données multimédias à utiliser pour le cryptage d'au moins une partie du bloc de données multimédias ;
un dispositif d'entrée dans le bloc de données de détermination (10, 30) d'un indice libre (42), l'indice libre (42) identifiant le dispositif de décryptage par lequel est possible un décryptage des données multimédias au-delà d'un laps de temps prédéterminé ;
un dispositif de sélection de l'algorithme de cryptage de données de détermination parmi une pluralité d'algorithmes de cryptage sur base de l'indice de cryptage de données de détermination (18) ;
un dispositif de sélection de l'algorithme de cryptage de données multimédias parmi une pluralité d'algorithmes de cryptage sur base de l'indice de cryptage de données multimédias (34, 36, 38, 44, 46) ;
un dispositif de cryptage du segment du bloc de données de détermination (10, 30) par l'algorithme de cryptage de données de détermination, le segment du bloc de données de détermination (10, 30) ne présentant pas l'indice de cryptage de données de détermination ; et
un dispositif de cryptage au moins partiel du bloc de données multimédias par l'algorithme de cryptage de données multimédias.

26. Dispositif de cryptage suivant la revendication 25, présentant, par ailleurs, les caractéristiques suivantes :
un dispositif d'entrée dans le bloc de données de détermination (10, 30) d'un indice d'utilisateur (38) indiquant l'utilisateur pouvant utiliser les données multimédias, d'un indice de défi (44) et d'un indice de réponse (46) ; et
un dispositif de calcul de l'indice de réponse (46) à partir de l'indice d'utilisateur (38), de l'indice de défi (44) et d'une clef spécifique pour un dispositif de cryptage.

27. Dispositif de décryptage de données multimédias encryptées suivant la revendication 1, aux caractéristiques suivantes :
un dispositif de lecture du bloc de données de détermination (10, 30) ;
un dispositif de sélection d'un algorithme de décryptage de données de détermination parmi une multitude d'algorithmes sur base de l'indice de cryptage de données de détermination (18) ;
un dispositif de sélection d'un algorithme de décryptage de données multimédias parmi une multitude d'algorithmes sur base de l'indice de cryptage de données multimédias (18) ;
un dispositif de décryptage du segment encrypté du bloc de données de détermination (10, 30)en utilisant l'algorithme de cryptage de données de détermination; et
un dispositif de décryptage du bloc de données multimédias en utilisant l'algorithme de décryptage de données multimédias sélectionné, le dispositif de décryptage des données multimédias ne décryptant le bloc de données multimédias au-delà d'un laps de temps prédéterminé que lorsque le dispositif présente un réglage approprié pour l'indice libre (42).

28. Dispositif de décryptage suivant la revendication 27, présentant, par ailleurs, un dispositif de calcul d'une clef pour l'algorithme de décryptage de données multimédias sélectionné, à partir d'une combinaison d'un indice d'utilisateur (38) présent dans le bloc de données de détermination (10, 30), d'un indice de défi (44) présent dans ce dernier et d'un indice de réponse (46) présent dans ce dernier.
